# EUROPEAN PATENT APPLICATION

(11) **EP 1 243 833 A2**
(43) Date of publication of application: **25.09.2002**
(21) Application number: 02075542.7
(22) Date of filing: 11.02.2002
(51) Int. Cl.: F16L 21/03

(54) **Method and device for fixing a rigid support ring in a channel shaped housing of a seal ring in flexible material**

(30) Priority: 09.02.2001 NL 1017327
(71) Applicant: Wava Oosterhout, 4902 VR Oosterhout (NL)
(72) Inventor: Simon, Theodorus Leopold, 4814 HE Breda (NL)
(74) Representative: Hoorweg, Petrus Nicolaas

(57) **Abstract**

Method and device for arranging a rigid ring in a channel-shaped housing of a seal ring of flexible material, which seal ring has to be placed on the inside of a pipe, in particular a plastic pipe, wherein the seal ring is set into a rotating movement, the ring is bent locally outward, the channel-shaped housing close to this bent portion is locally spread and the support ring is inserted into the spread part of the channel-shaped housing, whereby the seal ring is made more rigid in simple manner without much manual labour.

## Description

The invention relates to a method for arranging a rigid ring in a channel-shaped housing of a seal ring of flexible material, which seal ring has to be placed on the inside of a pipe, in particular a plastic pipe.

It is known in piping systems to mutually connect the pipes with a sleeve, in which sleeve is received a seal ring which is usually manufactured from plastic or such flexible material. At determined diameters it is recommended to make the ring more rigid, for which purpose a relatively thin support ring is arranged in a housing of a flexible seal ring.

It is known to perform this arranging of the support ring manually, which is relatively intensive work.

The invention has for its object to provide a method and device, wherein the arrangement can take place more easily and partly mechanically.

The method according to the invention is distinguished in that the seal ring is set into a rotating movement, the ring is bent locally outward, the channel-shaped housing close to this bent portion is locally spread and the support ring is inserted into the spread part of the channel-shaped housing.

Owing to the rotation of the ring, the support ring can be arranged in the housing with simultaneous rotation after being spread.

In order to have the ring then settle into the housing and to place itself fully into the correct position, it is recommended to deform the ring rotatingly to an oval.

The device according to the invention comprises a table, a first roller driven rotatably above the table and around the shaft perpendicularly thereof, a second roller situated at a distance therefrom and rotatable round a parallel shaft, wherein a guide member in front of the pinch between the two rollers is disposed fixedly and offset relative to the infeed direction thereof, which guide member has a fork-like end part, wherein the distance between the teeth is at least equal to the thickness of the support ring.

The fork-like guide member is placed relative to the rotation and clamping rollers such that the teeth of the fork not only spread the housing for receiving the support ring, but that the seal ring is also bent outward immediately preceding the transport rollers so that a bend in opposite direction as it were results relative to the normal diameter. This facilitates the introduction of the relatively rigid support ring.

For guaranteed complete insertion of the rigid ring into the housing of the rubber ring, the invention proposes simultaneous transport, whereby in addition to the oval shaping the ring is also rotated in its plane, whereby placing is facilitated. A transport moreover results from the assembly position to a lay-off position, which speeds up production.

The invention will be further elucidated in the figure description of an embodiment hereinbelow. In the drawing:
Fig. 1 shows a perspective view of two pipe ends with sleeve connection provided with a seal ring.
Fig. 2 shows on enlarged scale a detail of the seal ring with support ring for arranging therein.
Fig. 3 is a top view of the transport rollers and guide member according to the invention.
Fig. 4 is a view as according to arrows IV-VI in figure 3.
Fig. 5 is a perspective view of a transport channel according to the invention for deforming the filled seal ring.

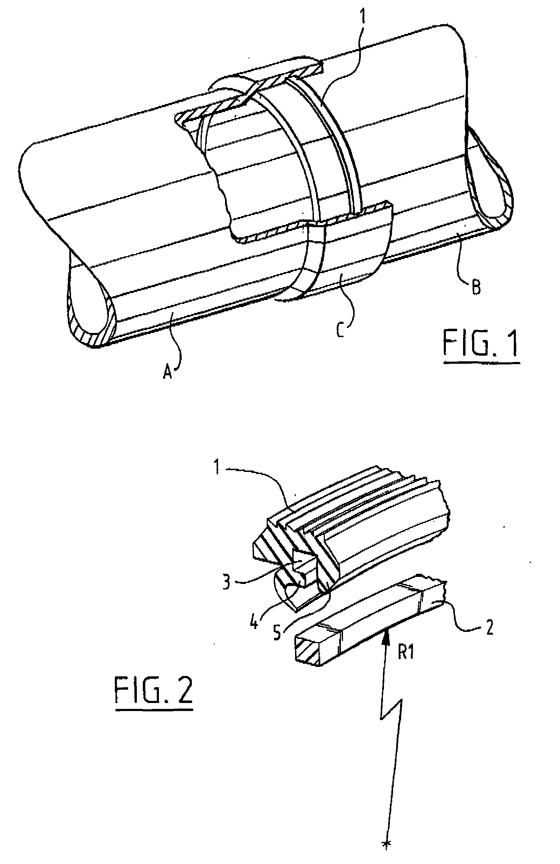

Figure 1 shows that two pipe ends A, B can be inserted into each other by means of a sleeve C, in which a seal ring 1 is arranged. This construction is presumed known and is not further elucidated.
Figure 2 shows a detail of seal ring 1 with a support ring 2 for arranging therein which must be received in housing 3 of seal ring 1. The housing is slightly closed by a lip 4 which, together with lip 5, must provide the sealing.

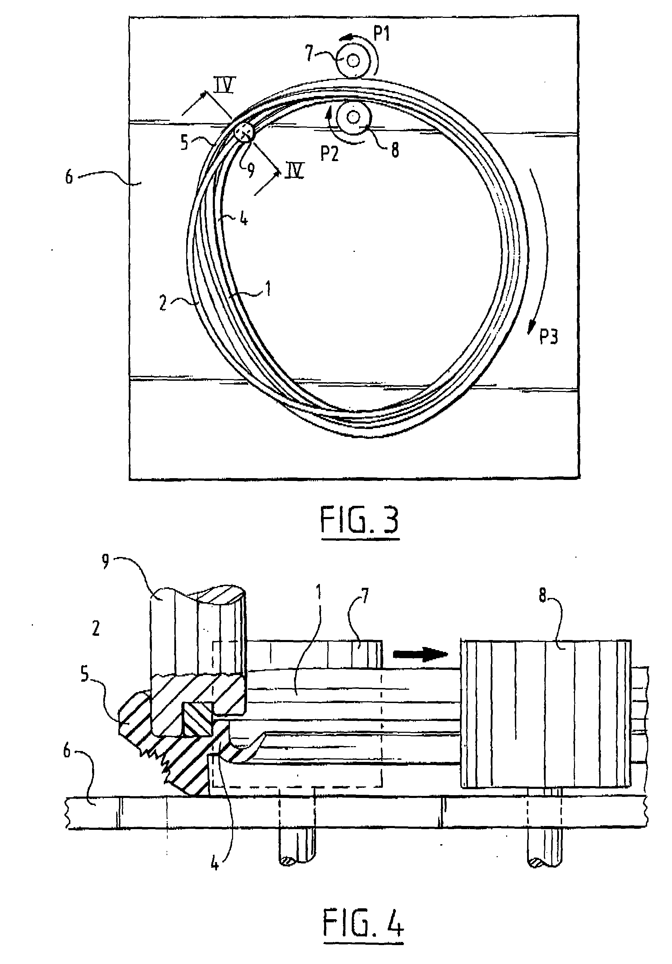

The device according to the invention is now elucidated with reference to figures 3 and 4. A randomly formed table 6 bears on the upper side a pair of rollers 7 respectively 8, at least one of which is driven in the direction of arrow P1 respectively P2. The distance between the two rollers is such that seal ring 1 is slightly clamped and can be set into rotation in the direction of arrow P3. On the front side, i.e. on the infeed side of the pinch between rollers 7, 8, is arranged a vertical guide pin 9 which is offset to the outside relative to the infeed direction, wherein the lower end of pin 9 is embodied in forked manner. The distance between teeth 10 of the fork leaves a space 11 which is at least equal to the thickness of support ring 2. The underside of the forks are disposed above table 6 such that housing 3 can be opened by spreading lips 4 and 5.

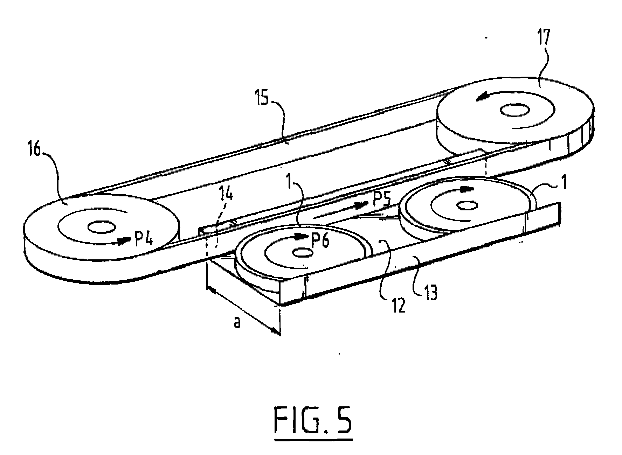

It will be apparent that when a support ring 2 is inserted it can be nestled into housing 3 immediately following the guide member 9 while the seal ring 1 is caused to rotate further in the direction of arrow P3. After a 360° rotation the ring is fully received in the housing. It may be that lips 4 and 5 of ring 1 are not wholly reset to the original form, and for this purpose an extra deformation must be applied to the rings 1 with support ring 2 therein. A channel-like transport path as according to figure 5 can be used for this purpose, wherein a flat bottom 12 is extended on either side in two upright walls 13 respectively 14, wherein the distance A therebetween is smaller than the-outer diameter of seal ring 1. A conveyor belt 15 is further trained around two rollers 16 respectively 17, this such that one part thereof is guided on the inner side of upright wall 14. By having roller 16 rotate in the direction of arrow P4 the belt will displace in the direction of arrow P5 along the inner side of wall 14. When seal rings 1 are fed in, belt 15 will carry these rings along, wherein they unroll on the wall 13 of the channel. They thereby acquire a rotation in the direction of arrow P6, wherein a transport in the direction of arrow P5 also takes place. The seal ring is ready for use at the end of the channel-like transporting means.

The invention is not limited to the above described embodiment.

## Claims

1. Method for arranging a rigid ring in a channel-shaped housing of a seal ring of flexible material, which seal ring has to be placed on the inside of a pipe, in particular a plastic pipe, **characterized in that** the seal ring is set into a rotating movement, the ring is bent locally outward, the channel-shaped housing close to this bent portion is locally spread and the support ring is inserted into the spread part of the channel-shaped housing.

2. Method as claimed in claim 1, **characterized in that** after arranging of the support ring the filled seal ring is deformed rotatingly to an oval such that the support ring can settle into the housing.

3. Device for arranging a rigid ring in a channel-shaped housing of a seal ring of flexible material, which seal ring has to be placed on the inside of a pipe, in particular a plastic pipe, which device comprises a table, a first roller driven rotatably above the table and around a shaft perpendicularly thereof, a second roller situated at a distance therefrom and rotatable round a parallel shaft, **characterized in that** a guide member in front of the pinch between the two rollers is disposed fixedly and offset relative to the infeed direction thereof, which guide member has a fork-like end part, wherein the distance between the teeth is at least equal to the thickness of the support ring.

4. Device as claimed in claim 3, **characterized by** means for causing the seal ring to rotate in its plane, wherein the ring is deformed in oval shape.

5. Device as claimed in claim 4, **characterized in that** the means consist of a transport channel with two parallel walls, the distance between which is smaller than the nominal outer diameter of the seal ring.

6. Device as claimed in claims 4 and 5, **characterized in that** a driven endless belt means is guided at least along one of the walls.
